# EUROPÄISCHE PATENTANMELDUNG

(11) **EP 4 151 669 A1**
(43) Veröffentlichungstag der Anmeldung: **22.03.2023**
(21) Anmeldenummer: 21196996.9
(22) Anmeldetag: 15.09.2021
(51) Int. Cl.: C08G 64/34

(54) **VERFAHREN ZUR HERSTELLUNG VON POLYETHERCARBONATPOLYOLEN**

(71) Anmelder: Covestro Deutschland AG, 51373 Leverkusen (DE)
(72) Erfinder: Braun, Stefanie, 51069 Köln (DE); Zwick, Horst, 41539 Dormagen (DE); Baer, Friedhelm, 41540 Dormagen (DE); Becker, Dirk, 31191 Algermissen (DE)
(74) Vertreter: Levpat

(57) **Zusammenfassung**

Die vorliegende Erfindung betrifft ein Computer-implementiertes Verfahren zur Steuerung eines Prozesses zur kontinuierlichen Herstellung von Polyethercarbonatpolyolen durch Anlagerung von Alkylenoxid (AO) und Kohlendioxid an H-funktioneller Startsubstanz, umfassend die Schritte
(I) Festsetzung von Sollwerten für Prozessparameter Xᵢ, enthaltend p, T, c_{cat}, τ, Massenströme von Alkylenoxid, Massenströme von Kohlendioxid und Massenströme von H-funktioneller Startersubstanz,
(II) Experimentelle oder rechnerische Bestimmung der Konzentration an freiem Alkylenoxid cAO₀ bei den in Schritt (I) definierten Sollwerten,
(III) Bestimmung der Größtfehlerberechnung für die maximale Schwankungsbreite der Parameter Xᵢ und des Einflusses der bestimmten Größtfehlerberechnung der Prozessparameter Xᵢ auf die freie Alkylenoxidkonzentration ΔcAOᵢ,
(IV) Überprüfung der Vorgabe cAOᵢ + cAO₀ < cAO_{safety,max},
wobei
cAOᵢ
für die Summe von ΔcAOᵢ für jede maximale Parameterschwankung steht,
cAO₀
für den Wert der freien AO-Konzentration bei den in (I) definierten Sollwerten steht,
cAO_{safety,max}
für den Maximalwert der freie AO-Konzentration steht, bei der eine sichere Prozessführung möglich ist,
wobei bei cAOᵢ + cAO₀ ≥ cAO_{safety,max} die Schritte (I) bis (IV) wiederholt werden und mindestens einer der in Prozessparameter Xᵢ enthaltenden Sollwerte in Schritt (I) variiert wird.

## Beschreibung

Die vorliegende Erfindung betrifft ein Computer implementiertes Verfahren zur sicheren Steuerung eines Prozesses zur kontinuierlichen Herstellung von Polyethercarbonatpolyolen.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie CO₂ zu einem Polymer darstellt. Als weiteres Produkt, eigentlich Nebenprodukt, entsteht das in Schema (I) gezeigte cyclische Carbonat (beispielsweise für R = CH₃ Propylencarbonat).

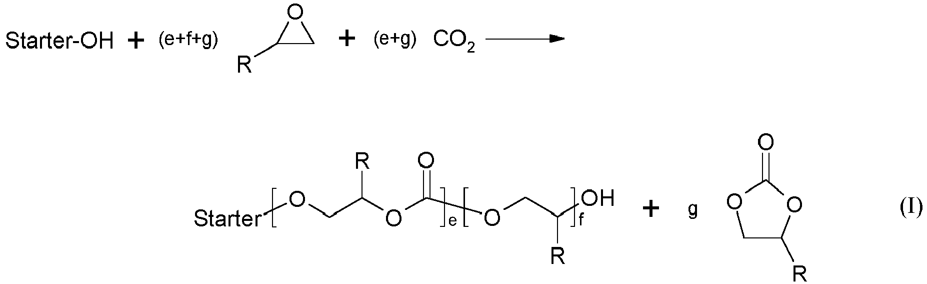

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem Co-Katalysator wie Zinksulfat. Dabei wird die Polymerisation initiiert, indem einmalig ein Teil des Alkylenoxids mit dem Katalysatorsystem in Kontakt gebracht wird. Erst danach werden die Restmenge Alkylenoxid und das Kohlendioxid simultan zudosiert. Die bei EP-A 0 222 453 für den Aktivierungsschritt in den Beispielen 1 bis 7 angegebene Menge von 60 Gew.-% Alkylenoxidverbindung relativ zur H-funktionellen Starterverbindung ist hoch und hat den Nachteil, dass dies für großtechnische Anwendungen aufgrund der hohen Exothermie der Homo-Polymerisation von Alkylenoxidverbindungen ein gewisses Sicherheitsrisiko darstellt.

WO-A 2016/001206 offenbart ein Verfahren zur Herstellung von Polyethercarbonatpolyolen durch Anlagerung von Alkylenoxiden und Kohlendioxid an eine oder mehrere H-funktionelle Startersubstanzen in Gegenwart eines DMC-Katalysators, bei dem bereits eine Konzentration an freiem Alkylenoxid von 5,5 Gew.-% in der Reaktionsmischung auf Grund zu großer Druck- und Temperaturschwankungen zu einem Abbruch aus Sicherheitsgründen führte.

Aufgabe der vorliegenden Erfindung ist deshalb die Bereitstellung eines Verfahrens, welches eine instabile Prozessführung verhindert.

Diese Aufgabe wird gelöst durch ein Computer-implementiertes Verfahren zur Steuerung eines Prozesses zur kontinuierlichen Herstellung von Polyethercarbonatpolyolen durch Anlagerung von Alkylenoxid (AO) und Kohlendioxid an H-funktioneller Startsubstanz, umfassend die Schritte
(I) Festsetzung von Sollwerten für Prozessparameter Xᵢ, enthaltend p, T, c_{cat}, τ, Massenströme von Alkylenoxid, Massenströme von Kohlendioxid und Massenströme von H-funktioneller Startersubstanz,
(II) Experimentelle oder rechnerische Bestimmung der Konzentration an freiem Alkylenoxid cAO₀ bei den in Schritt (I) definierten Sollwerten,
(III) Bestimmung der maximalen Parameterschwankung ΔXᵢ für die Prozessparameter Xᵢ und den Einfluss ΔcAOᵢ von ΔXᵢ auf die freie Alkylenoxidkonzentration cAOᵢ,
(IV) Überprüfung der Vorgabe cAOᵢ + cAO₀ < cAO_{safety,max},
   wobei
   - cAOᵢ: für die Summe von ΔcAOᵢ für jede maximale Parameterschwankung steht,
   - cAO₀: für den Wert der freien AO-Konzentration bei den in (I) definierten Sollwerten steht,
   - cAO_{safety,max}: für den Maximalwert der freien AO-Konzentration steht, bei der eine sichere Prozessführung möglich ist,
   wobei bei cAOᵢ + cAO₀ ≥ cAO_{safety,max} die Schritte (I) bis (IV) wiederholt werden und mindestens einer der in Prozessparameter Xᵢ enthaltenden Sollwerte in Schritt (I) variiert wird.

Die Erfindung führt dazu, dass der Anlagenführer zum Ausgleich von Schwankungen der Prozessparameter im Verfahren nicht in dem Maße von den Sollparametern abweichen kann, sodass dadurch eine Konzentration an freiem Alkylenoxid erhalten wird die außerhalb der Grenzen für eine stabile und sichere Führung des Prozesses liegt. Zusätzlich kann bereits vor dem Anfahren eines Prozesses mit bestimmten Prozessparametern Xᵢ überprüft werden, ob die Führung des Prozesses stabil und sicher erfolgen wird.

Im Folgenden soll die Erfindung näher erläutert werden.

### Schritt (I)

In einem ersten Schritt (I) werden die Sollwerte für die Prozessparameter Xᵢ festgesetzt. Bei den Sollwerten handelt es sich um die im stationären Zustand des kontinuierlichen Verfahrens angestrebten Prozessparameter Xᵢ. Als stationärer Zustand wird der Zustand im Verfahren bezeichnet, in dem ein Gleichgewicht zwischen der Summe der in den Reaktor zudosierten Substanzen und den aus dem Reaktor entnommenen Substanzen herrscht, sowie die Prozessparameter Xᵢ innerhalb begrenzter Schwankungsbreiten zeitlich konstant bleiben. Die Prozessparameter Xᵢ enthalten die Parameter Druck (p), Temperatur (T), Konzentration des Katalysators im stationären Zustand (c_{cat}), Verweilzeit (τ), Massenströme von Alkylenoxid, Massenströme von Kohlendioxid und Massenströme von H-funktioneller Startersubstanz. Die zudosierten Substanzen sind Alkylenoxid, Kohlendioxid, Katalysator und H-funktionelle Startersubstanz. Die aus dem Reaktor entnommenen Substanzen sind in der Regel Polyethercarbonatpolyol, cyclisches Carbonat, Katalysator und Kohlendioxid.

Der Druck kann 0,01 bis 120 bar, bevorzugt 0,1 bis 110 bar, besonders bevorzugt 1 bis 100 bar betragen. Der Sollwert für die Temperatur beträgt vorteilhafterweise 50 bis 150°C, bevorzugt 60 bis 145°C, besonders bevorzugt 70 bis 140°C und ganz besonders bevorzugt 90 bis 130°C. Werden Temperaturen unterhalb von 50°C eingestellt, wird die Reaktion im Allgemeinen sehr langsam. Bei Temperaturen oberhalb von 150°C steigt die Menge an unerwünschten Nebenprodukten stark an. Die Konzentration des Katalysators im stationären Zustand wird vorzugsweise so gewählt, dass der Gehalt an Katalysator im resultierenden Polyethercarbonatpolyol 10 bis 10000 ppm, bevorzugt 20 bis 5000 ppm, besonders bevorzugt 50 bis 500 ppm beträgt. Die Massenströme der Edukte sind unter anderem abhängig von der zu erzielenden Struktur des resultierenden Polyethercarbonatpolyols, der Reaktorgröße und der Verweilzeit im Reaktor. Die Massenströme von Alkylenoxid (AO) und H-funktioneller Startersubstanz (Starter) werden bevorzugt in einem Verhältnis AO:Starter von 0,5:1,0 bis 100:1, besonders bevorzugt 1:1,0 bis 50:1, insbesondere bevorzugt 1,5:1 bis 30:1 und ganz besonders bevorzugt 2:1 bis 10:1 eingesetzt. Bevorzugt werden die Massenströme so gewählt, dass ein Polyethercarbonatpolyol mit einer zahlenmittleren Molekularmasse Mₙ von 450 g/mol bis 4500 g/mol erhalten wird.

### Schritt (II)

In dem zweiten Schritt wird die freie Alkylenoxidkonzentration cAO₀ bei den in Schritt (I) festgelegten Sollwerten Xᵢ bestimmt. Die Bestimmung der freien Alkylenoxidkonzentration cAO₀ kann beispielsweise durch vorherige experimentelle Bestimmung und Messung der freien Alkylenoxidkonzentration mittels online IR-Spektroskopie oder simulierten Modellen durchgeführt werden. Bevorzugt beträgt cAO₀ maximal 5 Gew.-%.

### Schritt (III)

In Schritt (III) wird die maximale Parameterschwankung ΔXᵢ der Prozessparameter Xᵢ bestimmt und der Einfluss ΔcAOᵢ der bestimmten maximalen Parameterschwankung ΔXᵢ auf die freie Alkylenoxidkonzentration. Der Einfluss der maximalen Parameterschwankung ΔXᵢ der einzelnen Sollwerte auf die freie Alkylenoxidkonzentration in der Reaktionsmischung wird als ΔcAOᵢ bezeichnet. Wie bereits in Schritt (II) kann der Einfluss der maximalen Parameterschwankung der Sollwerte durch experimentelle Bestimmung oder Modellsimulationen ermittelt werden.

Die maximale Parameterschwankung wird durch Größtfehlerberechnung bestimmt. Die Größtfehlerberechnung gibt die maximale Parameterschwankung ΔXᵢ des jeweiligen festgelegten Sollwertes Xᵢ an.

### Schritt (IV)

Die in den Schritten (II) und (III) ermittelten Einflüsse auf die freie Alkylenoxidkonzentration durch die Sollwerte cAO₀ und deren Schwankungsbreite ΔcAOᵢ werden addiert und somit die bei maximaler Schwankung der Sollwerte zu erwartende freie Alkylenoxidkonzentration ermittelt. Die Summe dieser Einflüsse muss dabei unterhalb von cAO_{safety,max} liegen, wobei cAO_{safety,max} für den Maximalwert der freien AO-Konzentration steht, bei der eine sichere Prozessführung möglich ist. Der Wert cAO_{safety,max} ist abhängig vom Reaktor, bevorzugt beträgt cAO_{safety,max} jedoch höchstens 12 Gew.-%, besonders bevorzugt höchstens 10 Gew.-%, insbesondere höchstens 7 Gew.-%, jeweils bezogen auf die Reaktionsmischung.

Polyethercarbonatpolyole werden bevorzugt durch Anlagerung von Alkylenoxid und Kohlendioxid an eine H-funktionelle Startersubstanz in Anwesenheit eines DMC-Katalysators und/oder eines Metallkomplexkatalysators auf Basis der Metalle Zink und/oder Cobalt hergestellt, wobei
(α) eine H-funktionelle Startersubstanz oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der Katalysator der H-funktionellen Startersubstanz oder dem Suspensionsmittel vor oder nach der Trocknung zugesetzt wird,
(β) gegebenenfalls zur Aktivierung des DMC-Katalysators eine Teilmenge (bezogen auf die Gesamtmenge der bei der Aktivierung und Terpolymerisation eingesetzten Menge an Alkylenoxid) des Alkylenoxids zu der aus Schritt (α) resultierenden Mischung zugesetzt wird, wobei diese Zugabe einer Teilmenge an Alkylenoxid gegebenenfalls in Gegenwart von CO₂ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,
(γ) Alkylenoxid und Kohlendioxid an eine H-funktionelle Startersubstanz in einem Reaktor in Anwesenheit eines DMC-Katalysators oder eines Metallkomplexkatalysators auf Basis der Metalle Cobalt und/oder Zink angelagert werden.

Das Kohlendioxid kann in Schritt (γ) und gegebenenfalls auch in Schritt (β) beispielsweise durch einen Hohlwellenrührer, einer Einleitungsdüse oder einem Begasungsring (Verteilring) in den Reaktor eingeleitet werden. Bei der Verwendung einer Einleitungsdüse oder einem Begasungsring wird in der Regel ein Rührorgan, wie Scheibenrührer oder Schaufelrührer, mit eingesetzt. Beispielsweise Rührorgane wie ISOJET oder PHASEJET der Firma Ekato. Die Zugabe kann ebenfalls dadurch erfolgen, dass das Kohlendioxid dem Alkylenoxid zugemischt wird, wodurch die Anzahl an Einbauten verringert wird.

Eine bevorzugte Ausführungsform ist deshalb die Einleitung des Kohlendioxids als Gemisch mit Alkylenoxid mittels einer Einleitungsdüse oder einem Begasungsring in Kombination mit einem Scheibenrührer.

Die drei Schritte α, β und γ können in demselben Reaktor oder jeweils separat in unterschiedlichen Reaktoren durchgeführt werden. Besonders bevorzugte Reaktortypen sind Rührkessel (mit oder ohne externen Produktkreislauf), Rohrreaktor, und Schlaufenreaktor (mit intern oder extern geführten Produktumpumpungen), beispielsweise ein Buss Loop^{®} Reaktor. Ein Schlaufenreaktor wird ganz besonders bevorzugt eingesetzt, da beim kontinuierlichen Verfahren eine Kaskade an Reaktoren vermieden werden kann. Wird ein Rührkessel eingesetzt, so wird bevorzugt ein Rührkessel mit einem Wärmeaustauscher im Produktkreislauf eingesetzt. Werden die Reaktionsschritte α, β und γ in unterschiedlichen Reaktoren durchgeführt, kann für jeden Schritt ein unterschiedlicher Reaktortyp verwenden werden

### Alkylenoxid (AO)

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan. Vorzugsweise werden als Alkylenoxid Ethylenoxid und/oder Propylenoxid, insbesondere Propylenoxid eingesetzt. In dem erfindungsgemäßen Verfahren kann als Alkylenoxid auch eine Mischung von Alkylenoxiden eingesetzt werden.

### H-funktionelle Startersubstanz

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen.

Für die Alkoxylierung aktive Gruppen mit aktiven H-Atomen sind beispielsweise -OH, -NH2 (primäre Amine), -NH- (sekundäre Amine), -SH und -CO2H, bevorzugt sind -OH und -NH2, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF^{®} der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten, eingesetzt. Beispielhaft handelt es sich bei den C1-C24 Alkyl-Fettsäureester, die im Mittel mindestens 2 OH-Gruppen pro Molekül enthalten, um Handelsprodukte wie Lupranol Balance^{®} (Fa. BASF AG), Merginol^{®}-Typen (Fa. Hobum Oleochemicals GmbH), Sovermol^{®}-Typen (Fa. Cognis Deutschland GmbH & Co. KG) und Soyol^{®}TM-Typen (Fa. USSC Co.).

Als monofunktionelle Startersubstanz können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanz geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionelle Startersubstanz kann auch aus der Substanzklasse der Polyetherpolyole ausgewählt sein, die ein Molekulargewicht Mₙ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionelle Startersubstanz kann auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanz Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanz eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanz eingesetzten Polyethercarbonatpolyole werden hierzu in einem separaten Reaktionsschritt zuvor hergestellt.

Die H-funktionelle Startersubstanz weist im Allgemeinen eine Funktionalität (d.h. Anzahl an für die Polymerisation aktiven H-Atomen pro Molekül) von 1 bis 8, bevorzugt von 2 oder 3 auf. Die H-funktionelle Startersubstanz wird entweder einzeln oder als Gemisch aus mindestens zwei H-funktionellen Startersubstanzen eingesetzt.

Besonders bevorzugt handelt es sich bei der H-funktionellen Startersubstanz um mindestens eine Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht Mn im Bereich von 150 bis 8000 g/mol bei einer Funktionalität von 2 bis 3 und Polyetherpolyole mit einem Molekulargewicht Mn im Bereich von 150 bis 8000 g/mol und einer Funktionalität von 2 bis 3.

In einer besonders bevorzugten Ausführungsform ist in Schritt (α) die Teilmenge H-funktioneller Startersubstanz ausgewählt aus mindestens einer Verbindung der Gruppe bestehend aus Polyethercarbonatpolyolen mit einem Molekulargewicht Mn im Bereich von 150 bis 8000 g/mol bei einer Funktionalität von 2 bis 3 und Polyetherpolyolen mit einem Molekulargewicht Mn im Bereich von 150 bis 8000 g/mol und einer Funktionalität von 2 bis 3. In einer weiteren besonders bevorzugten Ausführungsform ist die H-funktionelle Startersubstanz in Schritt (γ) ausgewählt aus mindestens einer Verbindung der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit und Sorbitol.

Die Herstellung der Polyethercarbonatpolyole erfolgt durch katalytische Anlagerung von Kohlendioxid und Alkylenoxiden an H-funktionelle Startersubstanz. Unter "H-funktionell" wird im Sinne der Erfindung die Anzahl an für die Alkoxylierung aktiven H-Atomen pro Molekül der Startersubstanz verstanden.

### Katalysatoren

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die DMC-Katalysatoren werden vorzugsweise erhalten, indem man
(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,
und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (II),

M(X)ₙ (II)

wobei
M ausgewählt ist aus den Metallkationen Zn²⁺, Fe²⁺, Ni²⁺, Mn²⁺, Co²⁺, Sr²⁺, Sn²⁺, Pb²⁺ und, Cu²⁺, bevorzugt ist M Zn²⁺, Fe²⁺, Co²⁺ oder Ni²⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,
oder geeignete Metallsalze besitzen die allgemeine Formel (III),

Mᵣ(X)₃ (III)

wobei
M ausgewählt ist aus den Metallkationen Fe³⁺, Al³⁺, Co³⁺ und Cr³⁺,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,
oder geeignete Metallsalze besitzen die allgemeine Formel (IV),

M(X)ₛ (IV)

wobei
M ausgewählt ist aus den Metallkationen Mo⁴⁺, V⁴⁺ und W⁴⁺
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,
oder geeignete Metallsalze besitzen die allgemeine Formel (V),

M(X)ₜ (V)

wobei
M ausgewählt ist aus den Metallkationen Mo⁶⁺ und W⁶⁺
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,
Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel-(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VI)

(Y)ₐM'(CN)_{b}(A)_{c} (VI)

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. Li⁺, Na⁺, K⁺, Rb⁺)und Erdalkalimetall (d.h. Be²⁺, Mg²⁺, Ca²⁺, Sr²⁺, Ba²⁺),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den DMC-Katalysatoren enthalten sind, sind Verbindungen der allgemeinen Formel (VII)

Mₓ[M'ₓ,(CN)_{y}]_{z} (VII)

worin M wie in Formel (II) bis (V) und
M' wie in Formel (VI) definiert ist, und
x, x', y und z sind ganzzahlig und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykolmono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinyl-pyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des organischen Komplexliganden gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem Katalysator zu entfernen. Besonders bevorzugt liegt die Menge des organischen Komplexliganden in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus organischem Komplexliganden und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der DMC-Katalysatoren aus der Suspension durch Filtration, Filterkuchenwäsche und Trocknung wird in WO-A 01/80994 beschrieben.

Neben den bevorzugt eingesetzten DMC-Katalysatoren auf Basis von Zinkhexacyanocobaltat (Zn3 [Co(CN)6]2) können für das erfindungsgemäße Verfahren auch andere dem Fachmann aus dem Stand der Technik für die Copolymerisation von Epoxiden und Kohlendioxid bekannte Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284), sogenannte Cobalt-Salen-Katalysatoren (beschrieben z.B. in US 7,304,172 B2, US 2012/0165549 A1) und bimetallische Zink-Komplexe mit makrozyklischen Liganden (beschrieben z.B. in M. R. Kember et al., Angew. Chem., Int. Ed., 2009, 48, 931).

### Beispiele

Zur Veranschaulichung wurde das erfindungsgemäße Verfahren bei einer Formulierung zur Herstellung eines Polyethercarbonatpolyols auf Basis von Propylenoxid als Alkylenoxid und Glycerin als H-funktionelle Startersubstanz in Anwesenheit eines DMC-Katalysators (hergestellt nach Beispiel 6 von WO-A 01/80994) angewandt. Auf Grund der eingesetzten Reaktorgeometrie und der Zersetzungstemperatur des Polyethercarbonatpolyols wird für den Maximalwert der freie AO-Konzentration cAO_{safety,max} ein Wert von 10 Gew.-% Propylenoxid (PO) angestrebt. Die Sollwerte für die Prozessparameter Xᵢ sind in Tabelle 1 dargestellt (Schritt I), sowie der experimentell bestimmte Gehalt an freiem Propylenoxid bei den definierten Sollwerten von Tabelle 1 (Schritt II).

**Tabelle 1: Sollwerte der Prozessparameter Xᵢ**

| **Prozessparameter (Xᵢ)** | **Einheit** | **Sollwert** |
|---|---|---|
| Massenstrom von PO | kg/h | 6,7 |
| Massenstrom von H-funktionellen Starter | kg/h | 0,31 |
| Massenstrom von CO₂ | kg/h | 2,24 |
| Druck (p) | bara | 65 |
| Temperatur (T) | °C | 107 |
| Anteil an Katalysator (c_{cat}) | ppm | 150 |
| Verweilzeit (τ) | h | 3,4 |
| Anteil an freiem PO (cAO₀) | Gew.-% | 2,10 |

Der Wert für die freie Konzentration cAO₀ des Propylenoxids beträgt bei den Sollwerten in Tabelle 1 somit 2,10 Gew.-%. In Tabelle 2 ist der Einfluss der maximalen Schwankungsbreite der Paramter Xᵢ und deren Einfluss ΔcAOᵢ auf die freie Alkylenoxidkonzentration angegeben. Die maximalen Schwankungsbreiten der Massenströme hatten bei diesem Versuch keinen Einfluss auf die freie Alkylenoxidkonzentration und sind deswegen in Tabelle 2 nicht dargestellt. Bis auf den Parameter der Verweilzeit wurde der Einfluss der Größtfehlerberechnung der Prozessparameter Xi auf die freie Alkylenoxidkonzentration experimentell bestimmt (Schritt III). Der Einfluss der Größtfehlerberechnung der Verweilzeit wurde mittels einer Simulation am Computer ermittelt.

**Tabelle 2: Einfluss der Größtfehlerberechnung der Prozessparameter Xᵢ auf die freie Alkylenoxidkonzentration**

| **Prozessparameter** | **Einheit** | **Größtfehler** | | | | | |
|---|---|---|---|---|---|---|---|
| Druck (p) | bara | 5 | = | = | = | = | 5 |
| Temperatur (T) | °C | = | -2 | = | = | = | -2 |
| Anteil an Katalysator (c_{cat}) | ppm | = | = | -20 | = | = | -20 |
| Verweilzeit (τ) | h | = | = | = | -0.2 | = | -0.2 |
| Einfluss ΔcAOᵢ auf die freie Alkylenoxidkonzentration | wt.-% | 0.13 | 0.72 | 0.45 | 0.20 | 0.25 | 1.75 |

Die Bestimmung führt zu den Ergebnissen _{c}AOᵢ = 2,10 wt.-% und _{c}AO₀ = 1,75 wt.-% und somit zu einer Gesamtsumme von 3,85 wt.-% freiem Alkylenoxid. Die Vorgabe cAOᵢ + cAO₀ < cAO_{safety,max} mit cAO_{safety,max} = 10 wt.-% wird durch die eingestellten Sollwerte somit erfüllt (Schritt IV).

## Patentansprüche

1. Computer-implementiertes Verfahren zur Steuerung eines Prozesses zur kontinuierlichen Herstellung von Polyethercarbonatpolyolen durch Anlagerung von Alkylenoxid (AO) und Kohlendioxid an H-funktioneller Startsubstanz, umfassend die Schritte
(I) Festsetzung von Sollwerten für Prozessparameter Xᵢ, enthaltend p, T, c_{cat}, τ, Massenströme von Alkylenoxid, Massenströme von Kohlendioxid und Massenströme von H-funktioneller Startersubstanz,
(II) Experimentelle oder rechnerische Bestimmung der Konzentration an freiem Alkylenoxid cAO₀ bei den in Schritt (I) definierten Sollwerten,
(III) Bestimmung der Größtfehlerberechnung für die maximale Schwankungsbreite der Parameter Xᵢ und des Einflusses der bestimmten Größtfehlerberechnung der Prozessparameter Xᵢ auf die freie Alkylenoxidkonzentration Δ_{c}AOᵢ,
(IV) Überprüfung der Vorgabe cAOᵢ + cAO₀ < cAO_{safety,max},
wobei
cAOᵢ für die Summe von ΔcAOᵢ für jede maximale Parameterschwankung steht,
cAO₀ für den Wert der freien AO-Konzentration bei den in (I) definierten Sollwerten steht,
cAO_{safety,max} für den Maximalwert der freie AO-Konzentration steht, bei der eine sichere Prozessführung möglich ist,
wobei bei cAOᵢ + cAO₀ ≥ cAO_{safety,max} die Schritte (I) bis (IV) wiederholt werden und mindestens einer der in Prozessparameter Xᵢ enthaltenden Sollwerte in Schritt (I) variiert wird.

2. Verfahren gemäß Anspruch 1, **dadurch gekennzeichnet, dass** der Sollwert von p 1 bar bis 100 bar beträgt.

3. Verfahren gemäß einem der Ansprüche 1 oder 2, **dadurch gekennzeichnet, dass** der Sollwert von T 50 bis 150 °C beträgt.

4. Verfahren gemäß einem der Ansprüche 1 bis 3, **dadurch gekennzeichnet, dass** der Sollwert für c_{cat} 1 bis 2500 ppm, bezogen auf die Reaktionsmischung, beträgt.

5. Verfahren gemäß einem der Ansprüche 1 bis 4, **dadurch gekennzeichnet, dass** τ 0,5 bis 10 h, bevorzugt 1 bis 5h beträgt.

6. Verfahren gemäß einem der Ansprüche 1 bis 5, **dadurch gekennzeichnet, dass** als Katalysator ein DMC-Katalysator oder ein Metallkomplexkatalysator, basierend auf den Metallen Zink und/oder Cobalt eingesetzt wird.

7. Verfahren gemäß Anspruch 6, **dadurch gekennzeichnet, dass** das Herstellungsverfahren des Polyethercarbonatpolyols die Schritte
(α) eine H-funktionelle Startersubstanz oder ein Suspensionsmittel vorgelegt und gegebenenfalls Wasser und/oder andere leicht flüchtige Verbindungen durch erhöhte Temperatur und/oder reduziertem Druck entfernt werden ("Trocknung"), wobei der Katalysator der H-funktionellen Startersubstanz oder dem Suspensionsmittel vor oder nach der Trocknung zugesetzt wird,
(β) gegebenenfalls zur Aktivierung des DMC-Katalysators eine Teilmenge (bezogen auf die Gesamtmenge der bei der Aktivierung und Terpolymerisation eingesetzten Menge an Alkylenoxid) des Alkylenoxids zu der aus Schritt (α) resultierenden Mischung zugesetzt wird, wobei diese Zugabe einer Teilmenge an Alkylenoxid gegebenenfalls in Gegenwart von CO₂ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,
(γ) Alkylenoxid und Kohlendioxid an eine H-funktionelle Startersubstanz in einem Reaktor in Anwesenheit eines DMC-Katalysators oder eines Metallkomplexkatalysators auf Basis der Metalle Cobalt und/oder Zink angelagert werden,
enthält.

8. Verfahren gemäß einem der Ansprüche 1 bis 7, **dadurch gekennzeichnet, dass** cAO_{safety,max} höchstens 12 Gew.-% beträgt.

9. Verfahren gemäß einem der Ansprüche 1 bis 7, **dadurch gekennzeichnet, dass** cAO_{safety,max} höchstens 7 Gew.-% beträgt.

10. Verfahren gemäß einem der Ansprüche 1 bis 9, **dadurch gekennzeichnet, dass** cAO₀ höchstens 5 Gew.-% beträgt.

11. Verfahren gemäß einem der Ansprüche 1 bis 10, **dadurch gekennzeichnet, dass** das Verhältnis von Alkylenoxid zu H-funktioneller Startersubstanz 0,5:1,0 bis 100:1 beträgt.

12. Vorrichtung zur Datenverarbeitung, umfassend Mittel zur Ausführung des Verfahrens nach einem der Ansprüche 1 bis 11.

13. Computerprogramm, umfassend Befehle, die bei der Ausführung des Programms durch einen Computer diesen veranlassen, das Verfahren nach einem der Ansprüche 1 bis 11 auszuführen.

14. Computerlesbares Medium, umfassend Befehle, die bei der Ausführung durch einen Computer diesen veranlassen, das Verfahren nach einem der Ansprüche 1 bis 11 auszuführen.
